# EUROPEAN PATENT APPLICATION

(11) **EP 4 708 190 A1**
(43) Date of publication of application: **11.03.2026**
(21) Application number: 24212955.9
(22) Date of filing: 14.11.2024
(51) Int. Cl.: G06T 7/00, G06F 11/14

(54) **IMAGE PROCESSING FAULT DETECTION**

(30) Priority: 10.09.2024 IN 202441068173
(71) Applicant: NXP B.V., 5656 AG Eindhoven (NL)
(72) Inventor: Babinec, Tomas, 5656AG Eindhoven (NL); Subramanya Naidu, Sharath, 5656AG Eindhoven (NL); Bhattacharya, Rohitaswa, 5656AG Eindhoven (NL); Singh, Chanpreet, 5656AG Eindhoven (NL); Bohacik, Pavel, 5656AG Eindhoven (NL); Hulik, Rostislav, 5656AG Eindhoven (NL)
(74) Representative: Miles, John Richard

(57) **Abstract**

The disclosure relates to methods and systems for detecting faults in an image processing system (100), the image processing system (100) comprising an image signal processor (110). An example method comprises: dividing an image (10) into a first image tile (14a) and a second image tile (14b), wherein the first image tile (14a) and the second image tile (14b) each comprise an overlapping portion (13a, 13b) of the image (10); processing the first image tile (14a) using the ISP (110) to produce a first processed image tile (18a) comprising a first processed overlapping portion (17a); processing the second image tile (14a) using the ISP (110) to produce a second processed image tile (18a) comprising a second processed overlapping portion; calculating a characteristic (22) of the first processed overlapping portion and calculating the same characteristic (22) of the second processed overlapping portion; and comparing the characteristic (22) of the first processed overlapping portion and the characteristic (22) of the second processed overlapping portion.

## Description

### Field

The disclosure relates to systems and methods for detecting faults in an image processing system.

### Background

Image processing systems can generally be regarded as systems that apply a function to an input image to obtain a processed output image and/or useful information regarding the image. Image processing systems often incorporate image signal processors (ISPs); specialised components that are configured to take the unprocessed image file and apply signal processing techniques so as to enhance the image prior to further processing by the image processing system.

Image processing systems are used in a wide range of technologies and sectors, many of which are safety critical. In the automotive sector, image processing systems are increasingly being used to support driver aids, vehicle safety systems and autonomous driving capabilities. For example, a vehicle may utilise an image processing system to analyse images in order to detect road signs, lane markings, other vehicles, etc. The output of this may be used to provide warnings or information to the driver, or to inform autonomous driving, for example.

Where such systems are used in safety critical applications, it is important that the functionality of the image processing system - and particularly the ISP - is regularly verified. Hardware errors in these systems may result in potentially dangerous outputs being produced (e.g., incorrect information being provided to drivers).

However, providing sufficient verification can be challenging. Robustly verifying all hardware components in 'real-time' is difficult, given the complexity of modern computing architecture. Additionally, performing verification can significantly increase the computational demands placed on the image processing system.

### Summary

According to a first aspect there is provided a computer-implemented method of detecting faults in an image processing system. The image processing system comprises an image signal processor (ISP). The computer-implemented method comprises:
receiving an image;
dividing the received image into a first image tile and a second image tile, wherein the first image tile and the second image tile each comprise an overlapping portion of the received image;
processing the first image tile using the ISP to produce a first processed image tile comprising a first processed overlapping portion;
processing the second image tile using the ISP to produce a second processed image tile comprising a second processed overlapping portion;
calculating a characteristic of the first processed overlapping portion and calculating the same characteristic of the second processed overlapping portion; and
comparing the characteristic of the first processed overlapping portion and the characteristic of the second processed overlapping portion.

Because the first processed overlapping portion and the second processed overlapping portion correspond to the same portion of the received image (the input image), the calculated characteristics for said processed overlapping portions should be equal. Thus, when these characteristics are compared, discrepancies between the calculated characteristics may indicate a fault in image processing system (in particular the ISP, which has processed the overlapping portion in each of the first image tile and second image tile). Thus, the present disclosure advantageously provides an effective method for detecting hardware faults in the image processing system.

The computer-implemented method may further comprise: if comparison of the characteristic of the first processed overlapping portion and the characteristic of the second processed overlapping portion yields a difference, generating a fault output.

The fault output may comprise a numerical or text-based string. For example, the fault output may be provided to a user (via a visual display or audible alarm, for example), informing them that a fault has been detected. The fault output may be provided to a computer processor so as to initiate a further process. For example, where the present disclosure is used on board a semi-autonomous vehicle, the fault output may cause the vehicle to disengage a semi-autonomous driving mode.

Processing the first image tile using the ISP may comprise calculating the characteristic of the first processed overlapping portion. Processing the second image tile using the ISP may comprise calculating the characteristic of the second processed overlapping portion.

Using the ISP to calculate the characteristics of the first processed overlapping portion and/or the characteristics of the second processed overlapping portion, can advantageously reduce the number of additional components needed to perform fault detection and/or reduce additional computational requirements for this. As part of normal image processing, the ISP may already determine a characteristic of the image tiles that can be used for fault detection (e.g., a signal-to-noise ratio or a Fourier transform output). Thus, no separate characterisation calculation needs to be performed - the only additional computation that is needed compared to ordinarily processing the input image is the duplicated processing of the overlapping portions.

Calculating the characteristic of the first processed overlapping portion may be performed subsequent to processing the first image tile using the ISP. Calculating the characteristic of the second processed overlapping portion may be performed subsequent to processing the second image tile using the ISP. Calculating the characteristic of the first processed overlapping portion and the characteristic of the second processed overlapping portion may be performed using a characterisation module.

Using a separate characterisation module to calculate the characteristics subsequent to processing of the images tiles by the ISP (as opposed to calculating characteristics using the ISP itself) can advantageously enable fault detection for all other components of the image processing system. By providing the characterisation module at the end of the normal processing pipeline (i.e., after the ISP, where the processed image would ordinarily be passed to further image processing modules), faults associated with any component (e.g., all logic and memory components) upstream in the pipeline may be detectable by comparing the characteristics.

Calculating the characteristic of the first processed overlapping portion may comprise calculating the characteristic of a first plurality of sub-regions within the first processed image tile, wherein at least some of the first plurality of sub-regions are located within the first processed overlapping portion. Calculating the characteristic of the second processed overlapping portion may comprise calculating the characteristic of a second plurality of sub-regions within the second processed image tile, wherein at least some of the second plurality of sub-regions are located within the second processed overlapping portion.

Calculating characteristics across sub-regions can advantageously reduce computational requirements associated with calculating the characteristics. Calculating characteristics for sub-regions (e.g., 16x16 or 32x32 pixel regions of the image tiles) rather than for individual pixels may require less computation while still ensuring that a sufficient area each image tile is tested. The sub-regions that do have characterises calculated cover at least part of the first processed overlapping portion and the second processed overlapping portion, so that these can be directly compared. The plurality of sub-regions may only cover the processed overlapping portions, or a portion thereof, thereby minimising computation required to calculate characteristics for portions that only appear in either the first image tile or the second image tile and so cannot be directly compared to infer a fault.

Calculating the characteristic of the first processed overlapping portion and the characteristic of the second processed overlapping portion may comprise:
applying a cyclic redundancy check, CRC, algorithm to the first processed image tile and to the second processed image tile.

Using said algorithms for calculating the characteristics can advantageously reduce computation requirements associated with providing fault detection. The algorithms themselves are relatively computational inexpensive, requiring only calculation and comparison of relatively small data (each characteristic may be 2 or 4 bytes, for example). Additionally, these algorithms may already be used as part of the wider image processing system - e.g., an image processing system may already apply CRC as part of other system operations.

The computer-implemented method may further comprise:
storing the characteristic of the first processed overlapping portion and the characteristic of the second processed overlapping portion in a memory; and
verifying the characteristic of the first processed overlapping portion and/or the characteristic of the second processed overlapping portion using an external verification module.

Storing the calculated characteristics and analysing them using an additional verification module can advantageously enable additional verification of the image processing system. In addition to the comparative-based fault detection provide by the present disclosure, additional verification may be used to provide additional latent fault checks. These may enable the image processing system to utilise other well established fault detection techniques and to be verified to a desired standard, e.g., to meet Automotive Safety Integrity Level (ASIL) B criteria.

The computer-implemented method may further comprise storing the first image tile and the second image tile in a memory comprising a plurality of segments, wherein the overlapping portion of the first image tile is at least partially stored in a different one or more of the plurality of memory segments to the overlapping portion of second image tile.

By storing the overlapping portion of the first image tile in different memory segments to the overlapping memory segments of the second image tile, the method can advantageously enable fault detection for said memory segments. Faults (either transient or permanent) in the memory segments used to store the overlapping portion of the first image tile will not impact the overlapping portion of the second image tile. Thus, a detectable discrepancy between the calculated characteristics of the two image tiles may be produced by said fault.

Storing the second image tile may comprise shifting the plurality of memory segments by a predetermined number of segments, such that the second image tile is shifted by the predetermined number of segments within the memory compared to the first image tile.

Shifting the memory segments between processing of different image tiles can advantageously enable all segments of the memory to be exercised across multiple tiles. This may mean that, once all memory segments have been cycled through, faults on any of the segments may be detected. The memory segments may be shifted by one or more segments depending upon the size of the image tiles (e.g., the size of each column/row of data in the image tiles).

The computer-implemented method may further comprise inserting known data into at least one of the first image tile and the second image tile.

Inserting known data into one or more image tiles (e.g., by appending the image tiles with known data or padding portions) can advantageously provide a further means for detecting faults. Characteristics may be calculated for the known data portions and compared to an expected/precomputed characteristic, with faults resulting in a discrepancy. Comparing to a precomputed characteristic may reduce computational requirements as the known data need only be processed once. If the known data is appended to both the first image tile and the second image tile, characteristics may be calculated and compared for the known data portions of the two image tiles similarly to the overlapping portions discussed above.

The computer-implemented method may further comprise:
removing the first processed overlapping portion from the first processed image tile and/or removing the second processed overlapping portion from the second processed image tile; and
recombining the first processed image tile and the second processed image tile to produce a final processed image.

The final processing image, having had the overlapping portion removed, may be the same as if the original input image had been processed by the ISP. Thus, the current method can advantageously enable the described fault detection method to be applied to any known image processing system without disrupting the output of said system; the final processed image may be the same and therefore can be used for further processes as normal.

According to a second aspect there is provided an image processing system comprising an image signal processor (ISP). The image processing system is configured to:
receive an image;
divide the received image into a first image tile and a second image tile, wherein the first image tile and the second image tile each comprise an overlapping portion of the received image;
process the first image tile using the ISP to produce a first processed image tile comprising a first processed overlapping portion;
process the second image tile using the ISP to produce a second processed image tile comprising a second processed overlapping portion;
calculate a characteristic of the first processed overlapping portion and calculating the same characteristic of the second processed overlapping portion; and
compare the characteristic of the first processed overlapping portion and the characteristic of the second processed overlapping portion.

The ISP may form part of a system on a chip (SoC).

The described fault detection method may be particularly advantageous when used with SoC ISPs as minimal additional components used for fault detection are needed. Any suitable ISP may be utilised and provided with a separate characterisation module, for example. The image processing system may be implemented using any suitable computing device and is not limited to solely SoCs.

The image processing system may be configured to perform the computer-implemented method of the first aspect.

According to a third aspect there is provided an imaging system. The imaging system comprises:
a camera;
a user interface; and
an image processing system comprising an image signal processor (ISP), wherein the image processing system is configured to:
   receive an image;
   divide the received image into a first image tile and a second image tile, wherein the first image tile and the second image tile each comprise an overlapping portion of the received image;
   process the first image tile using the ISP to produce a first processed image tile comprising a first processed overlapping portion;
   process the second image tile using the ISP to produce a second processed image tile comprising a second processed overlapping portion;
   calculate a characteristic of the first processed overlapping portion and calculating the same characteristic of the second processed overlapping portion; and
   compare the characteristic of the first processed overlapping portion and the characteristic of the second processed overlapping portion,
wherein the camera is configured to capture the image and provide the image to the image processing system, and
wherein the user interface is configured to provide an output to a user based on the comparison of the characteristic of the first processed overlapping portion and the characteristic of the second processed overlapping portion.

The camera may be any suitable image-obtaining device and may be an existing device associated with a wider platform. For example, where the imaging system is to be applied to a vehicle, the camera(s) may already be provided on the vehicle for other driving functions and capabilities.

Providing an output to the user via a user interface can advantageously enable the user to react to detected faults. For example, where a discrepancy is detected between characteristics of the image tiles, the user (e.g., a driver) may be provided with a visual and/or auditory alert that a fault has been detected - e.g., a warning may be displayed on a vehicle's display system, accompanied by an alert noise. The output may also be provided to and utilised by other systems of the wider system. For example, autonomous driving capabilities relying on the processing of the ISP may be disabled upon detection of said fault, with the user being informed appropriately.

The imaging system may comprise the image processing system of the second aspect.

According to a fourth aspect there is provided a computer program comprising instructions to cause a computer processor to perform the method according to the first aspect.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram of an input image being divided into two image tiles with overlapping portions according to an example of the present disclosure;
Figure 2 is a schematic diagram of an example image processing system according to the present disclosure;
Figure 3 is a schematic diagram of an example imaging system according to the present disclosure;
Figure 4 is a schematic diagram of image tiles being saved to a segmented memory according to the present disclosure;
Figure 5 is a flow diagram of a method of detecting faults in an image processing system according to the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

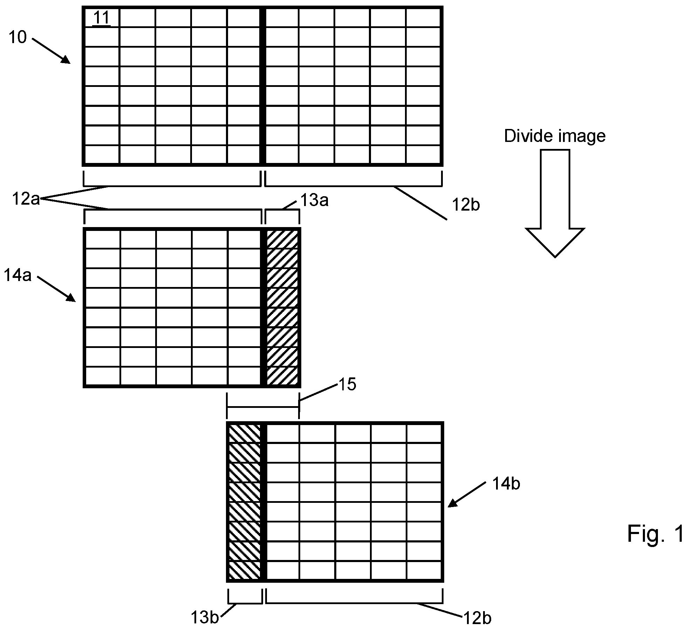

Figure 1 schematically illustrates an image 10 being divided into a first image tile 14a and a second image tile 14b. The image 10 comprises an array of image data. Each element 11 of the image data array may correspond to a pixel in the image 10. The image data may be an RGB image or a RAW image, for example.

The image 10 is divided into a first image portion 12a and a second image portion 12b. An adjacent portion 13a of the second image portion 12b is appended/padded to the first image portion 12a, thereby forming the first image tile 14a. Likewise, an adjacent portion 13b of the first image portion 12a is appended/padded to the second image portion 12b, thereby forming the second image tile 14b. As such, the first image tile 14a and the second image tile 14b comprise an overlapping portion 15; the pixels of the appended adjacent portions 13a, 13b are present in both image tiles.

For example, the image 10 may be an image that is 1280 pixels wide. The image may be divided vertically into first image portion 12a and second image portion 12b, each portion being 640 pixels. The edge of the image portions 12a, 12b along which the image 10 was divide may each be appended with a 16-pixel wide strip/column from the other of the image portions 12a, 12b. This process appending each of the image portions 12a, 12b with adjacent pixels creates first image tile 14a and second image tile 14b, each with a total width of 656 pixels. Both the first image tile 14a and the second image tile 14b comprise a vertical strip 32 pixels wide found in both image tiles 14a, 14b - the overlapping portion 15.

The above-mentioned padding of the image tiles 14a, 14b inherently means that the overlapping portions 15 are processed twice by the image processing system hardware (e.g., the ISP). As discussed further below, both processing iterations generate characteristics for the resulting processed overlapping portions 15, which may be stored and compared in order to detect both permanent and transient faults. By extending each of the image tiles 14a, 14b by a number of columns by appending each with adjacent portions 13a, 13b of the neighbouring image tile in this way, image artifacts in the final processed image may be avoided.

Although described as being a vertical bisection of the image 10, it will be understood that this is just one example of dividing the image 10 into a plurality of overlapping tiles. For example: the image 10 may be divided horizontally; the two image portions 12a, 12b do not necessarily need to be equally sized; the number of overlapping pixels may be varied; more than two image portions may be generated (the image 10 may be divided into four quadrants, with overlapping portions along the edge of each division, for example); and/or the image portions do not necessarily need to be rectangular or at an edge of the image 10 (the first image portion 12a may be a 'cut out' from within the second image portion 12b, for example).

The above dividing process may be implemented using any suitable computational operation. For example, the image 10 may be received and saved to a memory storage device (e.g., an external memory such as a double data rate (DDR) memory). The first image portion 12a and the adjacent portion 13a of the second image portion 12b may be read from the memory to be used in subsequent processes, thereby producing the first image tile 14a as this data is read. The second image tile 14b may be read similarly and subsequently. The overlapping portion may only be saved once, with said overlapping portion being read twice as part of the first image tile and the second image tile. This may reduce the amount of image data that needs to be stored.

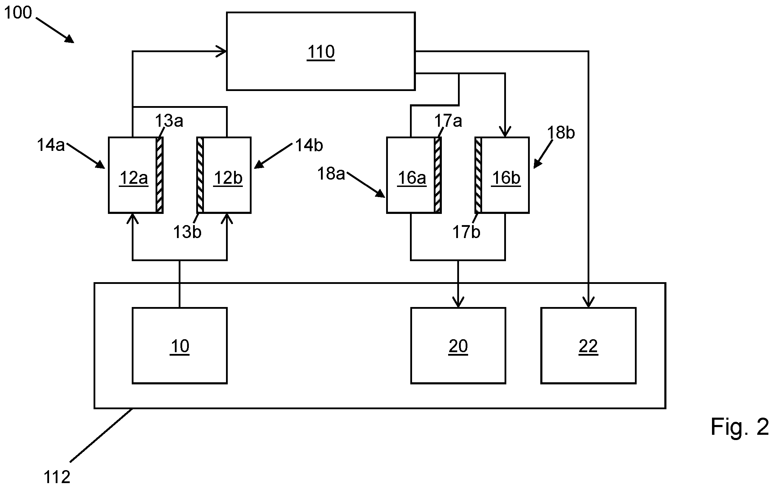

Figure 2 shows a schematic diagram of an image processing system 100. The image processing system 100 comprises an image signal processor (ISP) 110 and a memory storage device 112. An image 10 is stored in the memory storage device 112.

The image 10 is read from the memory storage device 112 and divide into a first image tile 14a and a second image tile 14b using the process discussed above with regard to Figure 1. The first image tile 14a and the second image tile 14b are provided to the ISP for processing. The image tiles 14a, 14b may be processed using any suitable digital image processing/algorithm. This may be dependent upon the ISP itself, and the application of the image processing device 100. For example, the ISP may be configured to perform denoising, sharpening, compression and/or filtering (either spatial or Fourier-based). The ISP may be used to provide High Dynamic Range (HDR), camera correction matrix, colour space conversion, chromatic aberration correction and/or demosaicing, for example.

The ISP outputs a first processed image tile 18a and second processed image tile 18b. The first processed image tile 18a comprises a first processed image portion 16a (i.e., a processed form of the first image portion 12a) and a processed adjacent portion 17a (i.e., a processed form of the adjacent portion 13a). Likewise, the second processed image tile 18b comprises a second processed image portion 16b and a processed adjacent portion 17b. Because the input image tiles 14a, 14b both comprise the overlapping portion 15, said overlapping portion 15 is processed in both image tiles, thereby generating a first processed overlapping portion in the first processed image tile 18a and a second processed overlapping portion in the second processed image tile 18b. Similarly to as shown in Figure 1, the first processed overlapping portion will comprise part of the first processed image portion 16a and the processed adjacent portion 17a. Likewise, the second processed overlapping portion will comprise part of the second processed image portion 16b and the processed adjacent portion 17b.

The adjacent portions 13a, 13b, having been processed by the ISP to produce processed adjacent portions 17a, 17b, may be removed from the processed image tiles 18a, 18. Otherwise, the whole overlapping portion may be removed from one of the processed image tiles 18a, 18b. The processed image tiles are then recombined so as to generate a processed output image 20. I.e., the processed first and second image portions 16a, 16b are recombined to generate a version of the input image 10 that has been processed by the ISP. The image processing system 100 also generates characteristics 22, also referred to as signatures. The characteristics 22, discussed further below, contain statistical or numeric information regarding the processed image tiles 18a, 18b, including information regarding the overlapping portions of both tiles. The processed output image 20 and the characteristics 22 may both be stored in the memory storage device 112.

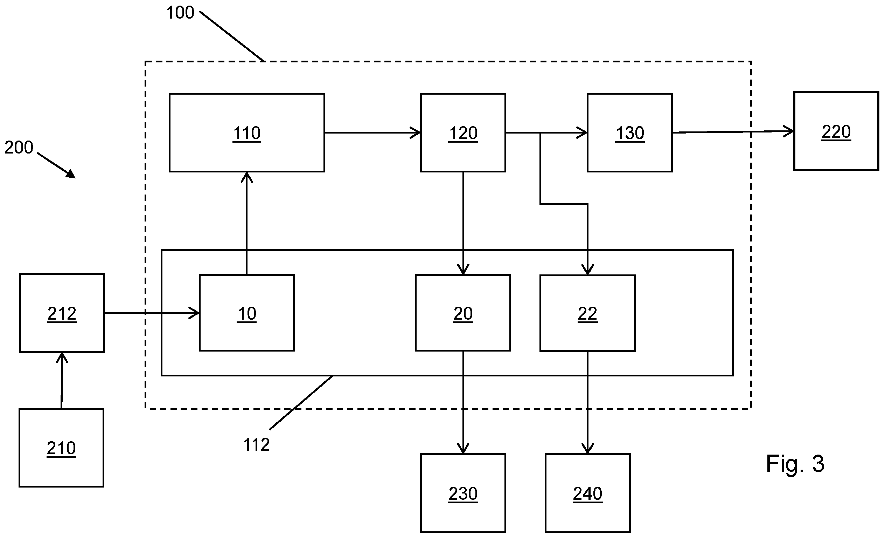

Figure 3 shows a schematic diagram of an imaging system 200. The imaging system 200 may comprise an image processing system 100 like that discussed above with regard to Figure 2. The image processing system 100 comprises an ISP 110 and a memory storage device 112. It will be understood that the ISP 110 may function as described in Figure 2; the generation of the image tiles and processed image tiles are omitted from Figure 3 for clarity.

The imaging system 200 comprises at least one imaging device 210 (e.g., a camera) that is configured to capture an image 10 that is received by the image processing system 100. Images captured by the imaging device 210 may pass through a capture pipeline 212 before being received by the image processing system 100. The capture pipeline 212 may comprise communication channels, an image sensor interface (ISI) module and/or a mobile industry processor interface (MIPI) module, for example.

The image processing system 100 of Figure 3 further comprises a characterisation module 120 that receives the processed image tiles from the ISP 110. The characterisation module 120 is configured to calculate the characteristics 22 of the processed tiles.

Any suitable algorithm/technique may be applied to the processed image tiles, such that the characteristics that are calculated may be any suitable characteristic. For example, the characterisation module 120 may be configured to apply an error-detecting algorithm (such as a cyclic redundancy check) to the processed image tiles, such that the characteristic 22 that is determined is check value.

Although shown as a separate characterisation module 120 in Figure 3, the calculation of the characteristics 22 may performed as part of the processing performed by the ISP 110. Statistical information generated by the ISP during processing may be output as the characteristics 22. For example, the ISP may be configured to calculate a signal-to-noise ratio (SNR), sum pixel values across sub-regions, or to perform a Fourier transform.

The characteristics 22 may be calculated for discrete sub-regions or patches of each of the image tiles. For example, the image tiles may be segmented into 32x32 pixel or 16x16 pixel sub-regions, with the characteristic being calculated across each sub-region. The characteristics 22 may therefore comprise a sequence or array of calculated characteristics. The characteristics 22 may be much smaller in size than the image 10; each characteristic may have a 2-byte or 4-byte value, for example. At least part of the overlapping portions of each of the first processed image tile and the second processed image tile will have characteristics calculated. One or more corresponding sub-regions in the overlapping portions may have said characteristic calculated, for example. Calculating the characteristics may comprise calculating characteristics across the whole of each image tile (including the overlapping portions), just the overlapping portions, or at least a portion of the overlapping portions.

The calculated characteristics 22 are received by a comparison module 130. The comparison module 130 is configured to compare the characteristics of the first processed image tile to the characteristics of the second processed image tile. The comparison module 130 compares the characteristics of sub-regions within the first processed overlapping region with the corresponding sub-regions within the second processed overlapping region. As above, this may be for the whole of the overlapping portions, or at least a portion of the overlapping portions.

Because the overlapping portions in each of the first image tile and the second image tile correspond to the same pixel of the input image, the characteristics 22 calculated in each of the first processed overlapping portion and the second processed overlapping portion should be equal. By comparing the characteristics, the comparison module 130 can thus detect faults within the hardware of the image processing system 100 (and particularly the ISP 110). Comparison of the characteristics may comprise finding a numerical difference, e.g., by calculating the difference between a value associated with the characteristic of the first processed overlapping portion to a corresponding value associated with the characteristic of the second processed overlapping portion.

Faults will appear as a discrepancy between the corresponding sub-region characteristics of the first and second processed image tiles. Faults may include:
i) Transient faults - temporary and/or fluctuating faults that either arise or disappear between the characteristic calculation of the first and second image tiles, thereby causing a discrepancy between the calculated characteristics. The image tiles may be processed sequentially, so as to maximise the possibility that a transient fault will arise between processing of the two tiles; and/or
ii) Permanent faults - persistent faults in hardware. Different hardware may be used to process the first and second image tiles. For example, the images tiles and/or the processed image tiles may be saved to different memory locations or processed using different processing cores of the ISP 100. Therefore, a hardware fault in any of these components will result in a discrepancy between the calculated characteristics (as only one of the image tiles is processed/stored on the hardware with a permanent fault).

By performing the characteristic calculation at the end of the image processing pipeline (e.g., using a separate characterisation module 120 after the ISP 110), the image processing system 100 can provide hardware fault detection capabilities to all upstream components - e.g., input logic, the exercised memory locations, the execution logic, registers and parameter memories that influence the behaviour of the execution logic. Although described as hardware faults, the system may also be capable of detecting software faults. Software/firmware errors may result in hardware components operating incorrectly, thus also generating a detectable discrepancy in the characteristics 22.

The comparison module 130 is configured to generate a fault output if a fault is detected (i.e., if there is a discrepancy between the characteristics of the first processed image tile and the second processed image tile, or if said discrepancy exceeds some predetermined threshold). The fault output is received by a user interface 220. The user interface 220 may be configured to alert a user of the imaging system 200 to the fact that a fault has been detected. The user interface 220 may comprise visual means (e.g., a display) and/or auditory means (e.g., an alarm) to alert the user. The user interface 220 may also comprise a storage medium, so that the detected faults can be retrieved later.

As in Figure 2, the output image 20 (corresponding to the recombined first image portion and second image portion) may be stored in the memory storage device 112. The output image 20 (i.e., the input image 10 that has been processed by the ISP 110) may be used by additional modules/processors 230 of the imaging system 200. The additional modules 230 may vary depending upon the application of the imaging system 200. For example, where the imaging system 200 is used to provide driver aids in a vehicle, the additional module 230 may be configured to detect road markings present within the output image 20 (e.g., by using edge detection and image segmentation techniques).

The characteristics 22 may also be saved (e.g., in memory storage device 112) and made available to additional module/processors, which may vary depending upon the application of the imaging system 200. The characteristics 22 may be provided to an verification module 240. The verification module 240 may be configured to analyse the characteristics 22, e.g., to compare the characteristics 22 to a predetermined expected value, thereby providing further verification that the characteristics 22 have been calculated correctly. The analysis may be performed on all or some of the characteristics 22. Any suitable additional analysis and processing may be performed, depending upon the characteristics 22 that are calculated. For example, the verification module 240 may be configured to perform an Automotive Safety Integrity Level (ASIL) decomposition. In a Quality Management (QM) ISP, the characterisation module 120 can be subjected to latent fault checks by the external ASIL-B software and hardware. In said configuration, the verification module 240 can be QM(B) and an external independent ASIL-B(B) hardware and software may verify the characteristics 22.

It will be understood that the implementation of the image processing system 100 shown in Figure 2, and the imaging system 200 shown in Figure 3, is only an example. The methods and systems shown may be implemented using any suitable computing solution and architecture. For example, the ISP 100, characterisation module 120 and comparison module 130 are shown as separate components in Figure 3. However, all of these components may be implemented on the same computing device. In particular, the ISP 110 and/or other components may be provided as a system on a chip (SoC). The characteristic calculation and comparison may therefore be capable of providing fault detection to the whole SoC.

Evidently, the methods and systems of the present invention may be applied repeatedly, so as to provide fault detection across a plurality of input images. This may be performed in parallel (e.g., performing the fault detection for multiple images captured by multiple cameras at the same time) and/or sequentially (e.g., performing the fault detection for all or some of the images captured as part of a video recording). Thus, these methods and systems can provide continuous monitoring for issues such as memory corruption or damaged logic circuitry.

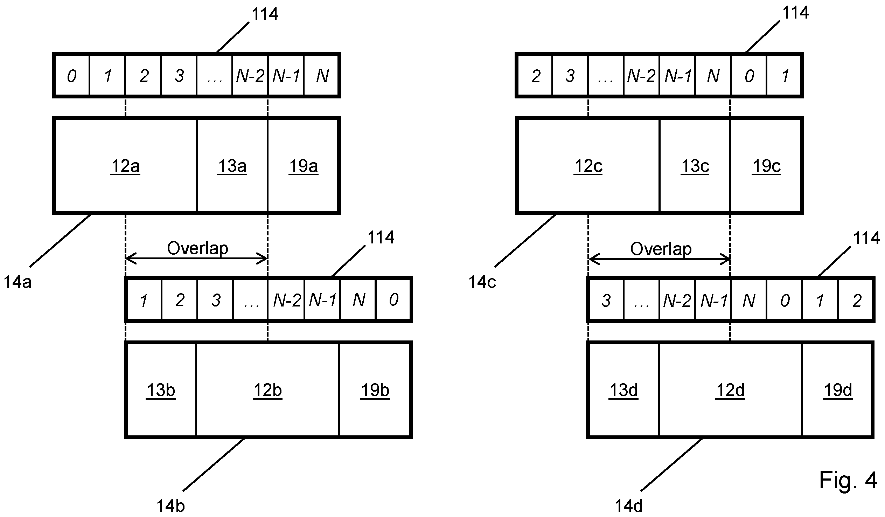

Referring to Figure 4, a schematic illustration is shown of image tiles 14a-d being saved in a segmented memory 114. The segmented memory 114 comprises N memory segments (numbered 0, *1, 2,* ... , *N-2, N-1, N*)*.* The segmented memory may comprise a plurality of buffer segments (e.g., line buffers). Different parts of the images/image tiles may be saved to different memory segments. For example, one or more corresponding columns/rows of the multiple image tiles may be saved to a different memory segment of the segmented memory 114.

In particular, the overlapping portions of the various image tiles may be saved to different memory segments. As shown in Figure 4, for the first image tile 14a, the first image portion 12a is saved to memory segments 0, 1, 2, 3, and the adjacent portion 13a of the second image portion 12b is saved to memory segments ..., N-2. Meanwhile, for the second image tile 14b, the second image portion 12b is saved to memory segments 3, ... *N-2, N-1* and the adjacent portion 13b of the first image portion 12a is saved to 1, 2. The result is that for the overlapping portions of the image that are found in both the first image tiles 14a and the second image tile 14b, at least some of the columns of the overlapping portions in the two image tiles are saved to different memory segments compared to the other image tile. Take, for example, the left-most column of the `Overlap' shown for the first and second image tiles 14a, 14b. For the first image tile 14a, this column (in first image part 12a) is stored in memory segment *2.* Meanwhile, for the second image tile 14b, this column (in adjacent portion 13b) is stored in memory segment *1.* By storing the overlapping portions in different memory segments, faults in said segments can be detected by the calculation of characteristics (as discussed above). E.g., if memory segment 1 was corrupted, the characteristic calculation of the overlapping portion in the second image tile 14b would be impacted, while the characteristic calculation of the overlapping portion in the first image tile 14a would not, thereby creating a discrepancy between the two corresponding calculated characteristics.

The memory segments of the segmented memory 114 may be rotated/shifted between processing each of the image tiles 14a-d. As shown in Figure 4, the memory segments are shunted one space to the left for each of the four image tiles 14a-d. E.g., the first image tile 14a starts reading from/writing to memory segment *0,* the second image tile 14b starts reading from/writing to memory segment *1,* and so on. As a result of this rotation, all memory segments of the segmented memory 114 may be exercised across the processing of a plurality of image tiles, thereby enabling faults to be detected for all memory segments. Figure 4 shows an example where a first input image is split into a first image tile 14a and second image tile 14b, and then a second input image is split into third image tile 14c (comprising third image portion 12c and an adjacent portion 13c of fourth image portion 12d) and fourth image tile 14d (comprising fourth image portion 12d and adjacent portion 13d of the third image portion 12c). However, the same process could equally be applied to a single input image being divided into more than two image tiles.

This method of saving overlapping portions of image tiles to different memory segments may be applied to any and/or all parts of the described fault detection methods/systems where images are saved or read. For example: memory segments may be rotated between the saving of different input images; different image tiles may be saved to different memory segments when provided to the ISP (as described above); and/or different processed image tiles may be saved to different memory segments following the processing of the ISP. In all cases, discrepancies in the calculated characteristics may be detectable by virtue of some portions of the image/image tiles being impacted by faults and others not. Although shown in Figure 4 as a shift of one place in the memory segments, other shift amounts may be used as appropriate. For example, where characteristics are calculated for sub-regions that span two memory segments, the memory segments may be shifted by two place each time so that the whole of said sub-region is shift to a different memory segment.

Known data and/or padding may be added to at least some of the image tiles prior to processing at the ISP. Known data may be added to only the first image tile, for example. As shown in Figure 4, each of the image tiles 14-a-d has been appended with known data portions 19a-d (e.g., a known test image pattern). Due to the rotation of memory segments discussed above, these known data portions 19a-d are also saved in different memory segments across the image tiles 14a-d - memory segments *N-1, N* for the first image tile 14a compared to memory segments *1, 2* for the fourth image tile 14d. As for the image portions and appended portions, the known data portions may have characteristics calculated using a characterisation module. As the data contained within the known data portions 19a-d is known, characteristics for each known data portion 19a-d may be compared against an expected characteristic. The calculated characteristics of the first known data portion 19a may be compared to the calculated characteristics of the second known data portion 19b using a comparison module, similar to the comparison of the overlapping portion's characteristics. Thus, the known data portions 19a-d provide a further means for verifying the calculated characteristics and thus may also be used to identify faults in the described image processing system (particularly hardware faults in certain memory segments of segmented memory 114) In addition to providing verification of the internal segmented memory (as described above), the known data may advantageously also allow verification of the wider image processing system, including registers and computation logic.

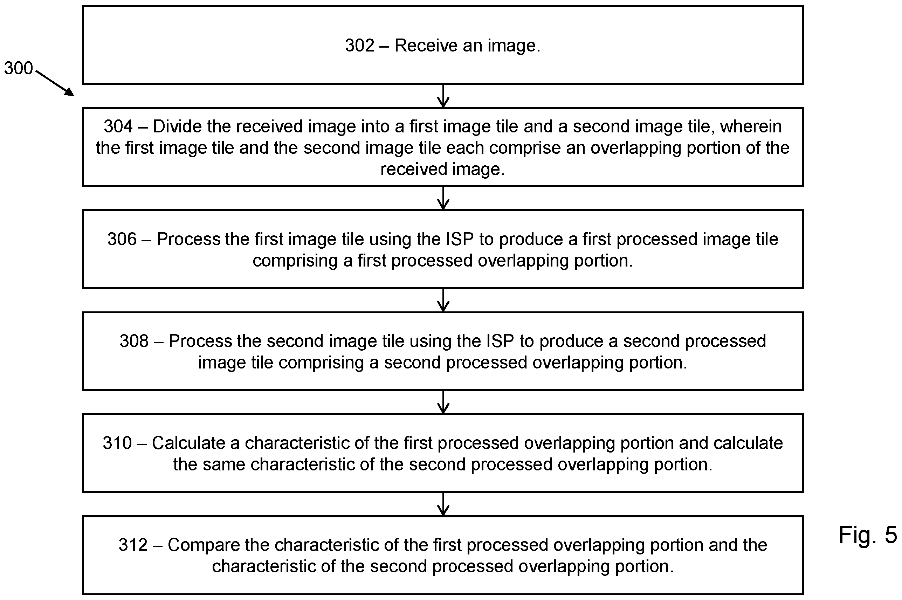

Figure 5 shows a flow diagram of a method 300 for detecting faults in an image processing system, the image processing system comprising an ISP. The method comprises:
receiving 302 an image;
dividing 304 the received image into a first image tile and a second image tile, wherein the first image tile and the second image tile each comprise an overlapping portion of the received image;
processing 306 the first image tile using the ISP to produce a first processed image tile comprising a first processed overlapping portion;
processing 308 the second image tile using the ISP to produce a second processed image tile comprising a second processed overlapping portion;
calculating 310 a characteristic of the first processed overlapping portion and calculating the same characteristic of the second processed overlapping portion; and
comparing 312 the characteristic of the first processed overlapping portion and the characteristic of the second processed overlapping portion.

The calculating 310 of the characteristics may be performed subsequent to processing 306, 308 the first image tile and the second image tile using the ISP, as shown in Figure 5. As discussed above, performing the characteristic calculation 310 subsequently may allow the method of the present disclosure to exercise and test the entire image processing pipeline.

However, it will be understood that the steps shown in Figure 5 do not necessarily have to be performed in this order; the order of some operations may be varied. For example, as also discussed above, the characteristics of the first processed overlapping portion and the second processed overlapping portion may be characteristics or statistics generated during the processing of the image tiles with the ISP - i.e., a separate calculation of the characteristics does not take place. In such an example, calculating 310 the characteristics may be understood to be performed concurrently with the processing 306, 308 of the first image tile and the second image tile.

Alternatively, calculating the characteristic of the first processed overlapping portion may be performed separately to calculating the characteristic of the second processed overlapping portion. In one example, the first image tile is processed 306 using the ISP to produce a first processed image tile comprising a first processed overlapping portion. The characteristic of the first processed overlapping portion is then calculated and saved to memory. Following the processing and characteristic calculation of the first image tile, the second image tile is processed 308 using the ISP to produce a second processed image tile comprising a second processed overlapping portion. Essentially, the step of calculating 310 the characteristics of the first and second processed overlapping portion can be divided into two separate operations, with calculation of the characteristic of the first processed overlapping portion being performed subsequent to processing 306 the first image tile using the ISP, and calculation of the characteristic of the second processed overlapping portion being performed subsequent to processing 308 the second image tile using the ISP.

By performing the calculation of the first image tile characteristics prior to processing of the second image tile, the amount of characteristics data that needs to be stored may be reduced and/or the bandwidth of the image processing system may be improved. With the characteristics of the first image tile already calculated, a final image comprising the entire processed received image may be generated in 'real time' as the second image tile is processed. The characteristics of the second image tile may be compared to the characteristics of the first image tile as they are calculated, rather than having to compute all of the comparisons for the various sub-regions (discussed above) at the same time.

Alternatively still, calculating 310 the characteristic of the first processed overlapping portion and the second processed overlapping portion may be performed prior to the processing 306, 308 of the first image tile and the second image tile using the ISP (or at least part of said processing). For example, the characteristics may be calculated after the first and second image tiles are read into the ISP (e.g., read into the segmented memory discussed in Figure 4) but prior to the ISP having actually processed the image tiles. This order of operations may still allow for fault detection in the preceding pipeline steps (e.g., detection of faults in the segmented memory and any operations performed prior to the ISP), but may reduce the processing requirements of the system. Having already calculated the characteristics associated with the first image tile and the second image tile, the overlapping portion may only need to be saved and processed by the ISP for one of said tiles.

The aforementioned method may be implemented using any suitable computing apparatus, including the image processing system/imaging devices of the present disclosure, or components thereof.

From reading the present disclosure, other variations and modifications will be apparent to the skilled person. Such variations and modifications may involve equivalent and other features which are already known in the art of image processing systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer-implemented method (300) of detecting faults in an image processing system (100), the image processing system (100) comprising an image signal processor (110), ISP, the computer-implemented method (300) comprising:
receiving (302) an image (10);
dividing (304) the received image (10) into a first image tile (14a) and a second image tile (14b), wherein the first image tile (14a) and the second image tile (14b) each comprise an overlapping portion (15) of the received image (10);
processing (306) the first image tile (14a) using the ISP (110) to produce a first processed image tile (18a) comprising a first processed overlapping portion;
processing (308) the second image tile (14b) using the ISP (110) to produce a second processed image tile (18b) comprising a second processed overlapping portion;
calculating (310) a characteristic (22) of the first processed overlapping portion and calculating the same characteristic (22) of the second processed overlapping portion; and
comparing (312) the characteristic (22) of the first processed overlapping portion and the characteristic (22) of the second processed overlapping portion.

2. The computer-implemented method (300) of claim 1, further comprising:
if comparison of the characteristic (22) of the first processed overlapping portion and the characteristic (22) of the second processed overlapping portion yields a difference, generating a fault output.

3. The computer-implemented method (300) of claim 1 or claim 2, wherein:
processing (306) the first image tile (14a) using the ISP (110) comprises calculating the characteristic (22) of the first processed overlapping portion; and
processing (308) the second image tile (14b) using the ISP (110) comprises calculating the characteristic (22) of the second processed overlapping portion.

4. The computer-implemented method (300) of claim 1 or claim 2, wherein:
calculating (310) the characteristic (22) of the first processed overlapping portion is performed subsequent to processing (306) the first image tile (14a) using the ISP (110); and
calculating (310) the characteristic (22) of the second processed overlapping portion is performed subsequent to processing (308) the second image tile (14b) using the ISP (110),
wherein calculating (310) the characteristic (22) of the first processed overlapping portion and the characteristic (22) of the second processed overlapping portion is performed using a characterisation module (120).

5. The computer-implemented method (300) of any preceding claim, wherein:
calculating (310) the characteristic (22) of the first processed overlapping portion comprises calculating the characteristic of a first plurality of sub-regions within the first processed image tile (18a), wherein at least some of the first plurality of sub-regions are located within the first processed overlapping portion; and
calculating (310) the characteristic (22) of the second processed overlapping portion comprises calculating the characteristic of a second plurality of sub-regions within the second processed image tile (18b), wherein at least some of the second plurality of sub-regions are located within the second processed overlapping portion.

6. The computer-implemented method (300) of any preceding claim, wherein calculating (310) the characteristic (22) of the first processed overlapping portion and the characteristic (22) of the second processed overlapping portion comprises:
applying a cyclic redundancy check, CRC, algorithm to the first processed image tile (18a) and to the second processed image tile (18b).

7. The computer-implemented method (300) of any preceding claim, further comprising:
storing the characteristic (22) of the first processed overlapping portion and the characteristic (22) of the second processed overlapping portion in a memory (112); and
verifying the characteristic (22) of the first processed overlapping portion and/or the characteristic (22) of the second processed overlapping portion using a verification module.

8. The computer-implemented method (300) of any preceding claim, further comprising storing the first image tile (14a) and the second image tile (14b) in a memory (114) comprising a plurality of segments, wherein the overlapping portion (15) of the first image tile (14a) is at least partially stored in a different one or more of the plurality of memory segments to the overlapping portion (15) of second image tile (14b).

9. The computer-implemented method (300) of claim 8, wherein storing the second image tile (14b) comprises shifting the plurality of memory segments by a predetermined number of segments, such that the second image tile (14b) is shifted by the predetermined number of segments within the memory (114) compared to the first image tile (14a).

10. The computer-implemented method (300) of any preceding claim, further comprising inserting known data (19) into at least one of the first image tile (14a) and the second image tile (14b).

11. The computer-implemented method (300) of any preceding claim, further comprising:
removing the first processed overlapping portion from the first processed image tile (18a) and/or removing the second processed overlapping portion from the second processed image tile (18b); and
recombining the first processed image tile (18a) and the second processed image tile (18b) to produce a final processed image (20).

12. An image processing system (100) comprising an image signal processor (110), ISP, wherein the image processing system (100) is configured to perform the method (300) of any of claims 1 to 11.

13. The image processing system (100) of claim 12, wherein the ISP (110) forms part of a system on a chip.

14. An imaging system (200) comprising:
a camera (210);
a user interface (220); and
the image processing system (100) of claim 12 or claim 13,
wherein the camera (210) is configured to capture an image (10) and provide the image (10) to the image processing system (100), and
wherein the user interface (220) is configured to provide an output to a user based on the comparison of the characteristic (22) of the first processed overlapping portion and the characteristic (22) of the second processed overlapping portion.

15. A computer program comprising instructions to cause a computer processor to perform the method (300) of any of claims 1 to 11.

## Amended claims

### Amended claims in accordance with Rule 137(2) EPC.

1. A computer-implemented method (300) of detecting faults in an image processing system (100), the image processing system (100) comprising an image signal processor (110), ISP, the computer-implemented method (300) comprising:
receiving (302) an image (10);
dividing (304) the received image (10) into a first image tile (14a) and a second image tile (14b), wherein the first image tile (14a) and the second image tile (14b) each comprise an overlapping portion (15) of the received image (10);
processing (306) the first image tile (14a) using the ISP (110) to produce a first processed image tile (18a) comprising a first processed overlapping portion;
processing (308) the second image tile (14b) using the ISP (110) to produce a second processed image tile (18b) comprising a second processed overlapping portion;
calculating (310) a characteristic (22) of the first processed overlapping portion and calculating the same characteristic (22) of the second processed overlapping portion;
comparing (312) the characteristic (22) of the first processed overlapping portion and the characteristic (22) of the second processed overlapping portion; and
if comparison of the characteristic (22) of the first processed overlapping portion and the characteristic (22) of the second processed overlapping portion yields a difference, generating a fault output.

2. The computer-implemented method (300) of claim 1, wherein:
processing (306) the first image tile (14a) using the ISP (110) comprises calculating the characteristic (22) of the first processed overlapping portion; and
processing (308) the second image tile (14b) using the ISP (110) comprises calculating the characteristic (22) of the second processed overlapping portion.

3. The computer-implemented method (300) of claim 1, wherein:
calculating (310) the characteristic (22) of the first processed overlapping portion is performed subsequent to processing (306) the first image tile (14a) using the ISP (110); and
calculating (310) the characteristic (22) of the second processed overlapping portion is performed subsequent to processing (308) the second image tile (14b) using the ISP (110),
wherein calculating (310) the characteristic (22) of the first processed overlapping portion and the characteristic (22) of the second processed overlapping portion is performed using a characterisation module (120).

4. The computer-implemented method (300) of any preceding claim, wherein:
calculating (310) the characteristic (22) of the first processed overlapping portion comprises calculating the characteristic of a first plurality of sub-regions within the first processed image tile (18a), wherein at least some of the first plurality of sub-regions are located within the first processed overlapping portion; and
calculating (310) the characteristic (22) of the second processed overlapping portion comprises calculating the characteristic of a second plurality of sub-regions within the second processed image tile (18b), wherein at least some of the second plurality of sub-regions are located within the second processed overlapping portion.

5. The computer-implemented method (300) of any preceding claim, wherein calculating (310) the characteristic (22) of the first processed overlapping portion and the characteristic (22) of the second processed overlapping portion comprises:
applying a cyclic redundancy check, CRC, algorithm to the first processed image tile (18a) and to the second processed image tile (18b).

6. The computer-implemented method (300) of any preceding claim, further comprising:
storing the characteristic (22) of the first processed overlapping portion and the characteristic (22) of the second processed overlapping portion in a memory (112); and
verifying the characteristic (22) of the first processed overlapping portion and/or the characteristic (22) of the second processed overlapping portion using a verification module.

7. The computer-implemented method (300) of any preceding claim, further comprising storing the first image tile (14a) and the second image tile (14b) in a memory (114) comprising a plurality of segments, wherein the overlapping portion (15) of the first image tile (14a) is at least partially stored in a different one or more of the plurality of memory segments to the overlapping portion (15) of second image tile (14b).

8. The computer-implemented method (300) of claim 7, wherein storing the second image tile (14b) comprises shifting the plurality of memory segments by a predetermined number of segments, such that the second image tile (14b) is shifted by the predetermined number of segments within the memory (114) compared to the first image tile (14a).

9. The computer-implemented method (300) of any preceding claim, further comprising inserting known data (19) into at least one of the first image tile (14a) and the second image tile (14b).

10. The computer-implemented method (300) of any preceding claim, further comprising:
removing the first processed overlapping portion from the first processed image tile (18a) and/or removing the second processed overlapping portion from the second processed image tile (18b); and
recombining the first processed image tile (18a) and the second processed image tile (18b) to produce a final processed image (20).

11. An image processing system (100) comprising an image signal processor (110), ISP, wherein the image processing system (100) is configured to perform the method (300) of any of claims 1 to 10.

12. The image processing system (100) of claim 11, wherein the ISP (110) forms part of a system on a chip.

13. An imaging system (200) comprising:
a camera (210);
a user interface (220); and
the image processing system (100) of claim 12 or claim 13,
wherein the camera (210) is configured to capture an image (10) and provide the image (10) to the image processing system (100), and
wherein the user interface (220) is configured to provide an output to a user based on the comparison of the characteristic (22) of the first processed overlapping portion and the characteristic (22) of the second processed overlapping portion.

14. A computer program comprising instructions to cause a computer processor to perform the method (300) of any of claims 1 to 10.
